# EUROPEAN PATENT APPLICATION

(11) **EP 4 797 423 A1**
(43) Date of publication of application: **26.08.2026**
(21) Application number: 26156330.8
(22) Date of filing: 04.02.2026
(51) Int. Cl.: H01M 50/528, H01M 50/533, H01M 50/534, H01M 50/536

(54) **RECHARGEABLE BATTERY AND BATTERY PACK INCLUDING THE SAME**

(30) Priority: 20.02.2025 KR 20250022334
(71) Applicant: SAMSUNG SDI CO., LTD., Yongin-si, Gyeonggi-do 17084 (KR)
(72) Inventor: Roh, Heyoung Cheoul, 16678 Suwon-si, Gyeonggi-do (KR); Park, Se Eun, 16678 Suwon-si, Gyeonggi-do (KR)
(74) Representative: Meissner Bolte Partnerschaft mbB

(57) **Abstract**

A battery (2), including a case (100), an electrode assembly (200) inside the case (100), the electrode assembly (200) including an electrode (210, 220), a tab member (301, 302) connected to the electrode (210, 220), the tab member (301, 302) extending from the electrode assembly (200), a cap assembly (400) facing the electrode assembly (200), the cap assembly (400) having a terminal (420, 430), and a current collector assembly (500, 600) between the electrode assembly (200) and the cap assembly (400), wherein the current collector assembly (500, 600) includes a current collecting plate (520, 620) coupled to the tab member (301, 302) and a flexible current collector (510, 610, 710) electrically connecting the current collecting plate (520, 620) and the terminal (420, 430).

## Description

### BACKGROUND

### 1. Field

The present invention relates to a rechargeable battery and a battery pack including the same.

### 2. Description of the Related Art

Rechargeable batteries are batteries that can be charged and discharged unlike primary batteries that cannot be recharged. Low-capacity rechargeable batteries are used in portable small electronic devices such as smartphones, feature phones, laptop computers, digital cameras, and camcorders, while high-capacity rechargeable batteries are widely used as power sources for motor driving in hybrid vehicles, electric vehicles, and the like, and batteries for power storage, or the like. These rechargeable batteries include electrodes including a positive electrode and/or a negative electrode, an electrode assembly including the electrodes, a case accommodating the electrode assembly, an electrode terminal connected to the electrode assembly, and the like.

As technology advances, high-capacity rechargeable batteries are required. Accordingly, a plurality of rechargeable batteries may be used by being electrically connected. For example, the rechargeable batteries can be applied to electronic devices in the form of a rechargeable battery module including a plurality of rechargeable batteries and/or a rechargeable battery pack including a plurality of rechargeable battery modules. A rechargeable battery pack may be configured as including the plurality of rechargeable batteries. In this case, the electronic devices are electronic devices requiring high output and/or high capacity and include, for example, electric vehicles and the like.

The rechargeable battery typically includes an electrode assembly in which a positive electrode, a separator, and a negative electrode are alternately disposed. The electrode assembly is accommodated inside the case. A plurality of positive electrodes and a plurality of negative electrodes (hereinafter, referred to as "electrodes") forming the electrode assembly are electrically connected to the outside through a positive electrode tab and a negative electrode tab (hereinafter, referred to as "electrode tabs"), respectively. That is, the plurality of positive electrode tabs and the plurality of negative electrode tabs are electrically connected to a positive electrode terminal and a negative electrode terminal (hereinafter, referred to as "electrode terminals") installed on a cap plate, respectively.

The above-described information disclosed in the background technology of this invention is only intended to improve understanding of the background of the present invention and therefore may include information that does not constitute related art.

### SUMMARY

The present invention relates to a battery, including a case, an electrode assembly inside the case, the electrode assembly including an electrode, a tab member connected to the electrode, the tab member extending from the electrode assembly, a cap assembly facing the electrode assembly, the cap assembly having a terminal, and a current collector assembly between the electrode assembly and the cap assembly, wherein the current collector assembly includes a current collecting plate coupled to the tab member and a flexible current collector electrically connecting the current collecting plate and the terminal.

The flexible current collector may include a main body portion including a flexible material, a first coupling portion extending from one end portion of the main body portion, the first coupling portion being joined to the current collecting plate, and a second coupling portion extending from another end portion of the main body portion, the second coupling portion being joined to the terminal.

The main body portion may include a bundle of metal wires.

The bundle of metal wires may be braided.

The first coupling portion and the current collecting plate may be joined to each other in a male-female coupling manner.

The first coupling portion may include a first coupling hole, and the current collecting plate may include a first coupling protrusion coupled in the first coupling hole.

The second coupling portion and the terminal may be joined to each other in a male-female coupling manner.

The second coupling portion may include a second coupling hole, and the terminal may include a second coupling protrusion coupled in the second coupling hole.

A virtual straight line connecting the first coupling portion and the second coupling portion may not be parallel to an extension direction of the tab member.

A battery may include a case, an electrode assembly disposed inside the case, the electrode assembly including an electrode, a tab member connected to the electrode, the tab member extending from the electrode assembly, a cap assembly facing the electrode assembly, the cap assembly having a terminal, and a current collector assembly between the electrode assembly and the cap assembly, the current collector assembly being electrically connected to the tab member and the terminal, wherein the current collector assembly includes a current collecting plate including a first sub plate with a first surface that is not joined to the tab member and a second sub plate extending from the first sub plate on at least one side of the first sub plate, the second sub plate having a first surface joined to the tab member, and a flexible current collector joined to a second surface side of the first sub plate to electrically connect the current collecting plate to the terminal.

The flexible current collector may include a main body portion including a flexible material, a first coupling portion extending from one end portion of the main body portion, the first coupling portion being joined to the second surface side of the first sub plate, and a second coupling portion extending from another end portion of the main body portion, the second coupling portion being joined to the terminal.

The main body portion may include a bundle of metal wires.

The bundle of metal wires may be braided.

The first coupling portion and the second sub plate may be joined to each other in a male-female coupling manner.

The first coupling portion may include a first coupling hole, and the first sub plate may include a first coupling protrusion coupled in the first coupling hole.

The second coupling portion and the terminal may be joined to each other in a male-female coupling manner.

The second coupling portion may include a second coupling hole, and the terminal may include a second coupling protrusion coupled in the second coupling hole.

A virtual straight line connecting the first coupling portion and the second coupling portion may not be parallel to an extension direction of the tab member.

The present invention includes a battery pack, including a housing, and a plurality of batteries inside the housing, wherein each of the plurality of batteries includes a case, an electrode assembly inside the case, the electrode assembly including an electrode, a tab member connected to the electrode, the tab member extending from the electrode assembly, a cap assembly facing the electrode assembly, the cap assembly having a terminal, and a current collector assembly between the electrode assembly and the cap assembly, wherein the current collector assembly includes a current collecting plate coupled to the tab member and a flexible current collector electrically connecting the current collecting plate and the terminal.

The current collecting plate may include a first sub plate having a first surface not joined to the tab member, and a second sub plate extending from the first sub plate on at least one side of the first sub plate, the second sub plate having a first surface joined to the tab member, and the flexible current collector may be joined to a second surface side of the first sub plate to electrically connect the current collecting plate to the terminal.

### BRIEF DESCRIPTION OF THE DRAWINGS

Features will become apparent to those of ordinary skill in the art by describing in detail exemplary embodiments with reference to the attached drawings, in which:
FIG. 1 is a perspective view schematically illustrating a configuration of a battery pack according to one or more embodiments of the present invention;
FIG. 2 is a perspective view schematically illustrating a configuration of a battery according to one or more embodiments of the present invention;
FIG. 3 is an exploded perspective view schematically illustrating the configuration of the battery of FIG. 2;
FIG. 4 is a cross-sectional view schematically illustrating the configuration of the battery of FIG. 2;
FIG. 5 is an enlarged view of portion V in the cross-sectional view of FIG. 4;
FIG. 6 is a diagram schematically illustrating a configuration of an electrode assembly included in the battery of FIG. 2; and
FIG. 7 is a diagram illustrating an example of a current collector according to one or more embodiments of the present invention.

### DETAILED DESCRIPTION

Hereinafter, exemplary embodiments of the present invention will be described in detail with reference to the attached drawings. Prior to this, terms or words used in this specification and claims should not be interpreted as being limited to ordinary or dictionary meanings and should be interpreted as meanings and concepts consistent with the technical idea of this invention based on the principle that the inventor can properly define the concept of the term in order to describe his or her invention in the best way. Accordingly, it is to be understood that the embodiments described herein, and the configurations illustrated in the drawings are only some of the most exemplary embodiments of the invention and do not represent all of the technical ideas of the invention, and that there may be various equivalents and modifications that may replace them at the time of filing.

Furthermore, when used herein, the terms "comprise" or "include" and/or "comprising" or "including" specify the presence of the mentioned shapes, numbers, steps, operations, members, elements, and/or groups thereof and are not intended to exclude the presence or addition of one or more other shapes, numbers, operations, members, elements, and/or groups thereof.

In addition, in order to help understand the invention, the attached drawings are not drawn to actual scale, and the dimensions of some components may be exaggerated. In addition, the same reference numbers may be assigned to the same components in different embodiments.

The statement that two objects for comparison are "equal" means "substantially the same." Therefore, substantially the same may include deviations that are considered low in the art, for example, deviations of less than 5%. Additionally, uniformity of a parameter over a given region may mean uniformity from an average perspective.

Although first, second, and the like are used to describe various components, these components are not limited by these terms. These terms are used only to distinguish one component from another, and unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as "connected to," or "coupled to" or "linked to" another component, these components may be directly connected, coupled or linked to each other, but it should be understood that other components may be "interposed" between these components, or these components may be "connected," "coupled," or "linked" through another component.

As used herein, the term "and/or" includes any and all combinations of one or more of the associated listed items. Further, the use of "may" when describing embodiments of the present invention relates to "one or more embodiments of the present invention." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above." Therefore, the term "below" can encompass both the upward and downward directions.

The terms used in the present specification are intended to describe the embodiments of the present invention and are not intended to limit the present invention.

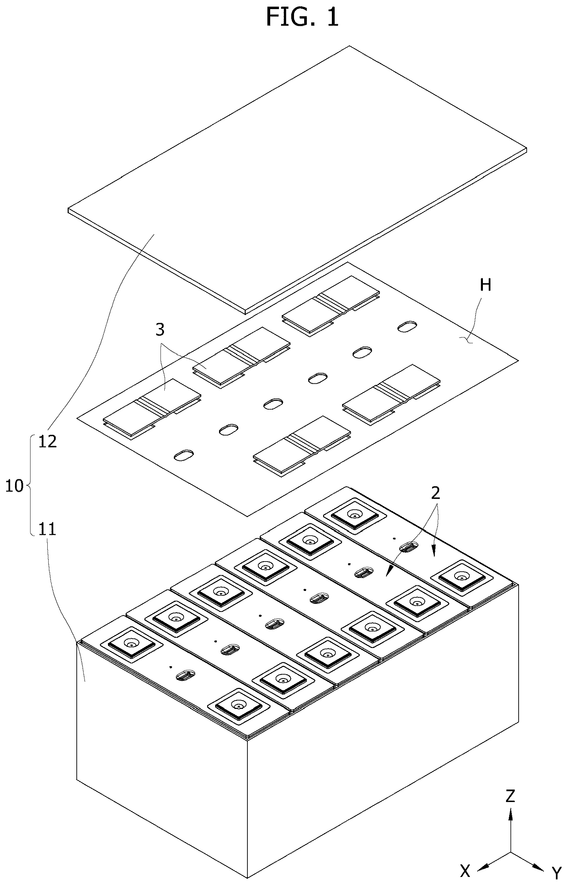

FIG. 1 is a perspective view schematically showing a configuration of a battery pack according to one or more embodiments of the present invention. Referring to FIG. 1, the battery pack may include a housing 10, a battery 2, and a bus bar 3.

The housing 10 may form an approximate exterior of the battery pack and provide a space in which a plurality of batteries 2 may be accommodated. The housing 10 may include a housing body 11 and a cover 12.

The housing body 11 may be formed in a shape of a box with an empty interior and one open surface. A cross-sectional shape of the housing body 11 may be designed to have various shapes such as polygonal, circular, and elliptical shapes.

The cover 12 may be coupled to the housing body 11 and may close the internal space of the housing body 11. In one example, the cover 12 may be formed to have a substantially plate shape and may be disposed to face the open surface of the housing body 11. The cover 12 may be fixed to the housing body 11 by various types of coupling methods such as bolting, welding, and fitting.

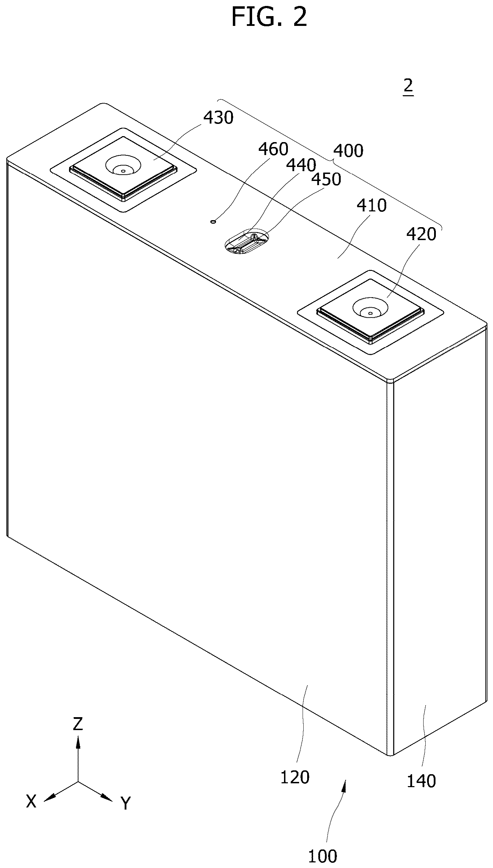

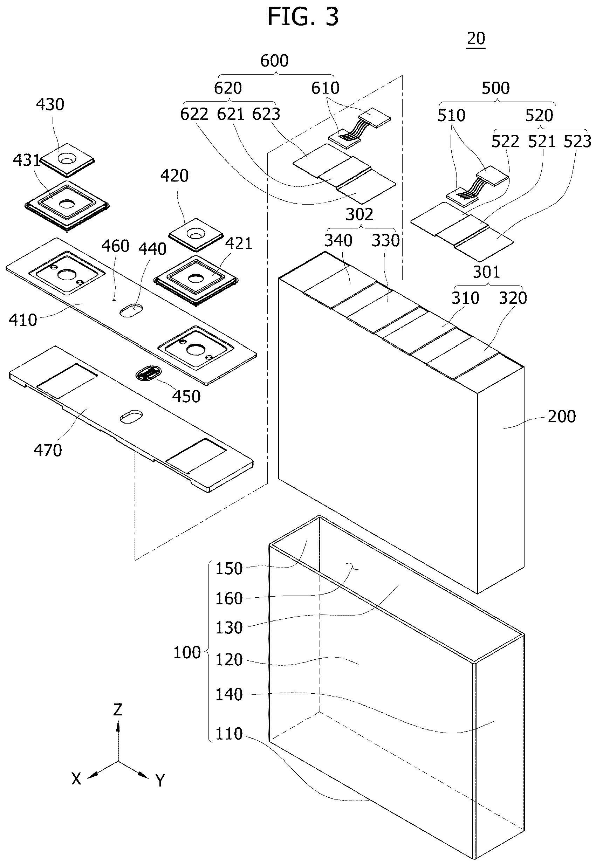

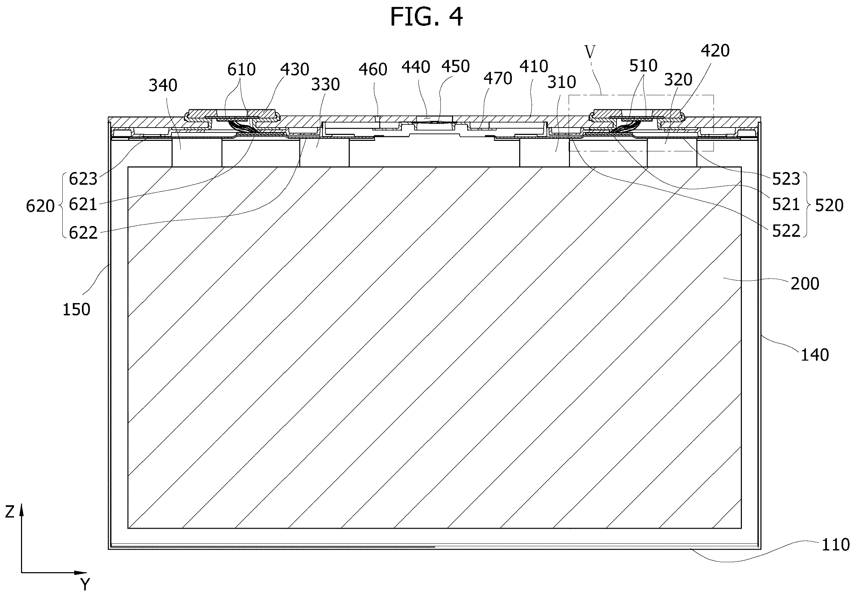

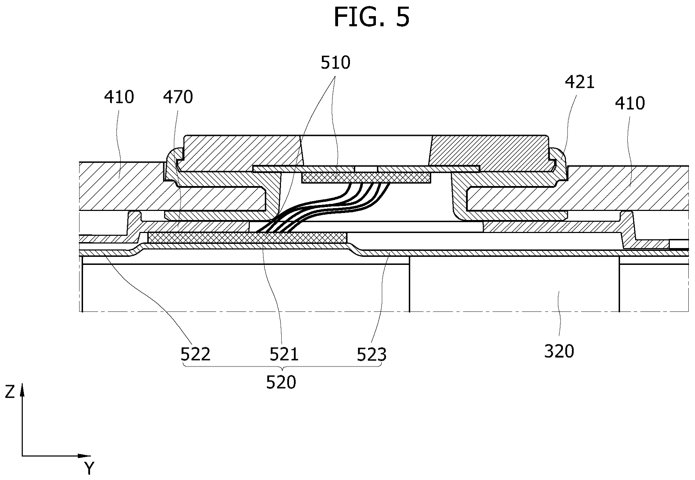

The battery 2 may function as a unit structure for storing and supplying power in the battery pack. FIG. 2 is a perspective view schematically illustrating a configuration of a battery according to one or more embodiments of the present invention, FIG. 3 is an exploded perspective view schematically illustrating the configuration of the battery of FIG. 2, FIG. 4 is a cross-sectional view schematically illustrating the configuration of the battery of FIG. 2, and FIG. 5 is an enlarged view of portion V in the cross-sectional view of FIG. 4.

Hereinafter, an example in which the battery 2 is a prismatic lithium-ion rechargeable battery will be described. However, the rechargeable battery may be a lithium polymer battery or a cylindrical battery.

Referring to FIGS. 2 to 5, the battery 2 may include a case 100, an electrode assembly 200, first and second tab members 301 and 302, a cap assembly 400, and first and second current collector assemblies 500 and 600.

The case 100 may form an approximate exterior of the battery 2 and accommodate the electrode assembly 200 therein. The case 100 may include a bottom portion 110, a front surface portion 120, a rear surface portion 130, a first side surface portion 140, and a second side surface portion 150.

The bottom portion 110 may form a bottom side exterior of the case 100 (based on FIG. 3). The bottom portion 110 may have a rectangular plate shape. The bottom portion 110 may be seated on a bottom surface of the housing body 11.

The front surface portion 120, the rear surface portion 130, the first side surface portion 140, and the second side surface portion 150 may form the exterior of the periphery of the case 100. The front surface portion 120, the rear surface portion 130, the first side surface portion 140, and the second side surface portion 150 may have plate shapes extending upward from the edges of the bottom portion 110 (based on FIG. 3). The front surface portion 120, the rear surface portion 130, the first side surface portion 140, and the second side surface portion 150 may be disposed to surround the space above the bottom portion 110. The front surface portion 120, the rear surface portion 130, the first side surface portion 140, and the second side surface portion 150 may be disposed to form a rectangular cross-sectional shape.

The front surface portion 120 and the rear surface portion 130 may be disposed to face each other in a longitudinal direction of the case 100 (e.g., parallel to the Y-axis). The front surface portion 120 and the rear surface portion 130 may be disposed parallel to each other. Areas of the front surface portion 120 and the rear surface portion 130 may be the same.

The first side surface portion 140 and the second side surface portion 150 may be disposed to face each other in a width direction of the housing 10 (e.g., parallel to the X-axis). The first side surface portion 140 and the second side surface portion 150 may be disposed parallel to each other. Areas of the first side surface portion 140 and the second side surface portion 150 may be the same. Each of the areas of the first side surface portion 140 and the second side surface portion 150 may be smaller than the area of the front surface portion 120 or the rear surface portion 130.

The case 100 may further include an opening 160. The opening 160 may refer to a space surrounded by upper end portions of the front surface portion 120, the rear surface portion 130, the first side surface portion 140, and the second side surface portion 150. The opening 160 may interconnect the space inside and outside the case 100. Accordingly, the case 100 may have the shape of a rectangle with an open top.

A first direction to be described below may refer to a direction parallel to a Z-axis and a direction from the bottom portion 110 toward the opening 160 based on FIG. 3 or 4. A second direction may refer to a direction parallel to a Y-axis and a direction from the first side surface portion 140 toward the second side surface portion 150 based on FIG. 3 or 4. A third direction may refer to a direction parallel to an X-axis and a direction from the front surface portion 120 toward the rear surface portion 130 based FIG. 3 or 4.

The electrode assembly 200 may function as a unit structure that performs charging and discharging operations of power in the battery 2. The electrode assembly 200 may be accommodated in the case 100.

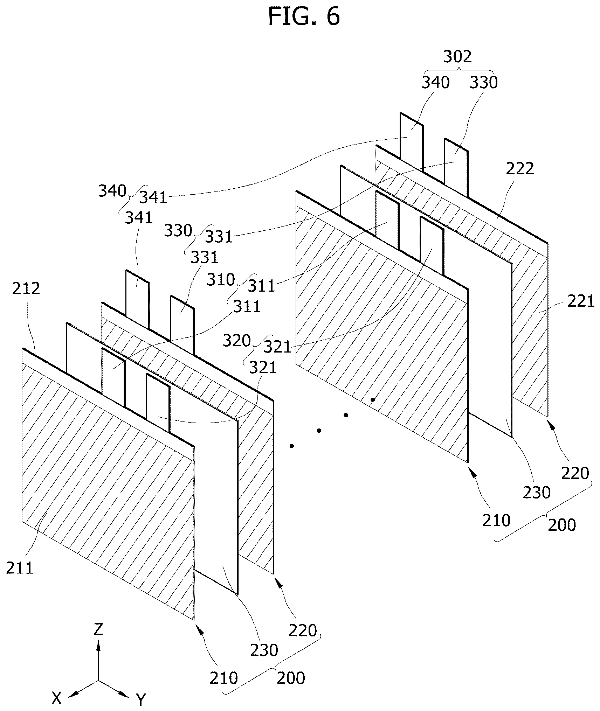

FIG. 6 is a diagram schematically illustrating a configuration of an electrode assembly which may be included in the battery 2 of FIG. 2. Referring to FIG. 6, the electrode assembly 200 may include a first electrode 210, a second electrode 220, and a separator 230 disposed between the first electrode 210 and the second electrode 220. A plurality of first electrodes 210, separators 230, and second electrodes 220 may be provided.

Hereinafter, the electrode assembly 200 will be described as having a stacked form in which a plurality of first electrodes 210, a plurality of separators 230, and a plurality of second electrodes 220 are sequentially stacked in the third direction. However, a laminate in which a sheet-shaped first electrode 210, separator 230, second electrode 220, and separator 230 each having a relatively longer length than width are stacked may be formed to have a form that is wound in a clockwise or counterclockwise direction around a winding axis, or may be formed to have a form that is stacked by being wound in a predetermined length unit.

The first electrode 210 may function as either a positive electrode or negative electrode of the electrode assembly 200. Hereinafter, the first electrode 210 will be described as an example of the positive electrode of the electrode assembly 200. However, the first electrode 210 may also function as the negative electrode of the electrode assembly 200.

The first electrode 210 may be formed to have a foil form including a metal material such as aluminum or an aluminum alloy. The type, size, shape, etc. of the first electrode 210 may vary, as long as the first electrode 114 has conductivity without causing a chemical change in the battery. A cross-sectional shape of the first electrode 210 may be designed to have various shapes in addition to the rectangular shape shown in FIG. 6.

A plurality of first electrodes 210 may be provided. The plurality of first electrodes 210 may be arranged between the front surface portion 120 and the rear surface portion 130 of the case 100 in the third direction. The number of first electrodes 210 may be designed in various ways depending on the charging capacity, etc. of the battery 2.

A first active material layer 211 may be formed on at least a portion of the first electrode 210. The first active material layer 211 may be formed on both surfaces of the first electrode 210, or alternatively, may be formed on only one surface of the first electrode 210. Since the first electrode 210 functions as a positive electrode, the first active material layer 211 may include a positive electrode active material.

The positive electrode active material may be a compound capable of reversible intercalation and deintercalation of lithium (lithiated intercalation compound). More specifically, one or more of composite oxides of lithium and a metal selected from cobalt, manganese, nickel, and a combination thereof may be used.

In one example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM), and may include any two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer 211 may further include a positive electrode conductive material.

The positive electrode conductive material is used to impart conductivity to the first active material layer 211, and any material which does not cause a chemical change and is electronically conductive may be used. Examples of the positive electrode conductive material may include a carbon material such as natural graphite, artificial graphite, carbon black, acetylene black, Ketjen black, carbon fibers, carbon nanofibers, and carbon nanotubes, a metal material in the form of a metal powder or metal fiber containing copper, nickel, aluminum, silver, etc., a conductive polymer such as a polyphenylene derivative, or a mixture thereof.

The first active material layer 211 may further include a positive electrode binder.

The positive electrode binder serves to attach the particles constituting the positive electrode active material to each other well, and also attach the positive electrode active material to the first electrode 210 well. An example of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, polyester resin, (meth)acrylic resin, phenolic resin, epoxy resin, polyvinyl alcohol, and a combination thereof.

When the aqueous binder is used as the positive electrode binder, a cellulose-based compound may be further contained to impart viscosity. The cellulose-based compound may be used by mixing one or more of carboxymethyl cellulose, hydroxypropyl methyl cellulose, methyl cellulose, or alkali metal salts thereof. Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The first electrode 210 may include a first uncoated portion 212 on which the first active material layer 211 is not formed. The first uncoated portion 212 may be disposed in an upper end region of the first electrode 210 disposed to face the opening 160 in the case 100. However, the first uncoated portion 212 may be formed over an entire edge region of the first electrode 210.

The second electrode 220 may function as the other of the positive electrode and the negative electrode of the electrode assembly 200. Hereinafter, the second electrode 220 will be described as an example of the negative electrode of the electrode assembly 200. However, the second electrode 220 may also function as the positive electrode of the electrode assembly 200.

A plurality of second electrodes 220 may be provided. The plurality of second electrodes 220 may be arranged between the front surface portion 120 and the rear surface portion 130 of the case 100 in the third direction. The first electrodes 210 and the second electrodes 220 may be alternately disposed in the third direction. The second electrode 220 may be spaced apart from the first electrode 210 at a set interval in the third direction.

The second electrode 220 may be formed to have a foil shape including a metal material such as copper, a copper alloy, nickel, or a nickel alloy. The type, size, shape or the like of the second electrode 220 may vary, as long as it has conductivity and does not cause a chemical change in the battery. A cross-sectional shape of the second electrode 220 may be designed to have various shapes in addition to the rectangular shape shown in FIG. 6.

A second active material layer 221 may be formed on at least a portion of the second electrode 220. The second active material layer 221 may be formed on both surfaces of the second electrode 220, or alternatively, may be formed on only one surface of the second electrode 220.

Since the second electrode 220 functions as the negative electrode, the second active material layer 221 may include a negative electrode active material.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite such as amorphous, plate-like, flaky, spherical, or fibrous natural graphite or artificial graphite, and examples of the amorphous carbon may include soft carbon or hard carbon, mesophase pitch carbide, calcined coke, and the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

As the material capable of doping and dedoping lithium, a Si-based negative electrode active material or Sn-based negative electrode active material may be used. The Si-based negative electrode active material may include silicon, a silicon-carbon composite, SiOₓ (0<x<2), a Si-Q alloy (where Q is selected from alkali metals, alkaline earth metals, group 13 elements, group 14 elements (excluding Si), group 15 elements, group 16 elements, transition metals, rare earth elements, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to one or more embodiments, the silicon-carbon composite may be in the form of silicon particles whose surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles so that, for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material.

The second active material layer 221 may further include a negative electrode conductive material and a negative electrode binder.

The negative electrode conductive material is used to impart conductivity to the second active material layer 221, and any material which does not cause a chemical change and is electronically conductive may be used. Examples of the negative electrode conductive material may include a carbon-based material such as natural graphite, artificial graphite, carbon black, acetylene black, Ketjen black, carbon fibers, carbon nanofibers, and carbon nanotubes, a metal-based material in the form of a metal powder or metal fiber containing copper, nickel, aluminum, silver, etc., a conductive polymer such as a polyphenylene derivative, or a mixture thereof.

The negative electrode binder serves to attach the particles constituting the negative electrode active material to each other well, and also attach the negative electrode active material to the second electrode 220 well.

An example of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, polyester resin, (meth)acrylic resin, phenolic resin, epoxy resin, polyvinyl alcohol, and a combination thereof.

When the aqueous binder is used as the negative electrode binder, a cellulose-based compound may be further contained to impart viscosity. The cellulose-based compound may be used by mixing one or more of carboxymethyl cellulose, hydroxypropyl methyl cellulose, methyl cellulose, or alkali metal salts thereof. Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The second electrode 220 may include a second uncoated portion 222 on which the second active material layer 221 is not formed. The second uncoated portion 222 may be disposed in an upper end region of the second electrode 220 disposed to face the opening 160 in the case 100. However, the form of the second uncoated portion 222 may vary, and the second uncoated portion 222 may be formed over an entire edge region of the second electrode 220.

The separator 230 may be disposed between the first electrode 210 and the second electrode 220. The separator 230 may perform a function of preventing a short circuit between the first electrode 210 and the second electrode 220 while allowing lithium ions to move between the first electrode 210 and the second electrode 220.

The separator 230 may be disposed to entirely cover a surface region of the electrode assembly 200. Accordingly, the separator 230 may prevent the first electrode 210 and the second electrode 220 from being directly exposed to the outside of the electrode assembly 200.

As the separator 230, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator 230 may include a porous substrate and a coating layer containing an organic material, an inorganic material, or a combination thereof located on one surface or both surfaces of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (such as Teflon), or a copolymer or mixture of two or more thereof.

The organic material may include a polyvinylidene fluoride-based polymer or a (meth) acryl-based polymer.

The inorganic material may include, but is not limited thereto, inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof.

The organic material and the inorganic material may be present as a mixture in a single coating layer or may be present in a form in which a coating layer including an organic material and a coating layer including an inorganic material are stacked.

The first tab member 301 may be connected to the first electrode 210 and may protrude outward from the electrode assembly 200. As the first electrode 210 functions as the positive electrode, the first tab member 301 may function as a positive electrode tab of the battery 2. However, when the first electrode 210 is the negative electrode, the first tab member 301 may function as a negative electrode tab of the battery 2.

The first tab member 301 may extend from the electrode assembly 200 in the first direction. That is, the first tab member 301 may extend toward the opening 160 from the inside of the case 100.

The first tab member 301 may include one or a plurality of tab members. For example, the first tab member 301 may include a first inner tab member 310 and a first outer tab member 320. However, the first tab member 301 may include one tab member or three or more tab members.

The first inner tab member 310 and the first outer tab member 320 may be spaced apart from each other in the second direction. For example, the first outer tab member 320 and the first inner tab member 310 may be sequentially disposed in the second direction. That is, the first outer tab member 320 may be disposed at a position spaced a predetermined distance apart from the first inner tab member 310 in a direction opposite to the second direction. The first outer tab member 320 may be disposed at a position relatively closer to the first side surface portion 140 than the first inner tab member 310.

The first inner tab member 310 may include a first inner tab 311. The first inner tab 311 may have the shape of a foil extending from the first uncoated portion 212 of the first electrode 210 in the first direction. The first inner tab 311 may have a substantially rectangular shape. However, the shape of the first inner tab 311 may be designed to have various shapes.

The first inner tab 311 may be formed integrally with the first electrode 210. For example, the first inner tab 311 may be the remaining region of the first uncoated portion 212 which remains after a partial region of the first uncoated portion 212 is cut or removed by notching processing or the like. In one or more other embodiments, the first inner tab 311 may be manufactured separately from the first electrode 210 and then connected to the first uncoated portion 212 by welding or the like. A material of the first inner tab 311 may be the same as a material of the first electrode 210.

A plurality of first inner tabs 311 may be provided. The number of first inner tabs 311 may be the same as the number of first electrodes 210. Each of the first inner tabs 311 may individually extend from the first uncoated portion 212 of a different first electrode 210. Neighboring first inner tabs 311 may be disposed to face each other in the third direction. The neighboring first inner tabs 311 may be disposed parallel to each other. The first inner tab member 310 may be an assembly of the plurality of first inner tabs 311 stacked in the third direction. The neighboring first inner tabs 311 may come into contact with each other and may also be spaced apart from each other by a thickness of the separator 230.

The first outer tab member 320 may include a first outer tab 321. The first outer tab 321 may have the shape of a foil extending from the first uncoated portion 212 of the first electrode 210 in the first direction. The first outer tab 321 may be disposed at a position spaced a predetermined distance apart from the first inner tab 311 in a direction opposite to the second direction. The first outer tab 321 may have a substantially rectangular shape. However, the shape of the first outer tab 321 may be designed to have various shapes.

The first outer tab 321 may be formed integrally with the first electrode 210. For example, the first outer tab 321 may be a region excluding the first inner tab 311 among the remaining region of the first uncoated portion 212 which remains after the partial region of the first uncoated portion 212 is cut or removed by notching processing or the like. In one or more other embodiments, the first outer tab 321 may be manufactured separately from the first electrode 210 and then connected to the first uncoated portion 212 by welding or the like. A material of the first outer tab 321 may be the same as a material of the first electrode 210.

A plurality of first outer tabs 321 may be provided. The number of first outer tabs 321 may be the same as the number of first electrodes 210. Each of the first outer tabs 321 may individually extend from the first uncoated portion 212 of a different first electrode 210. Neighboring first outer tabs 321 may be disposed to face each other in the third direction. The neighboring first outer tabs 321 may be disposed parallel to each other. The first outer tab member 320 may be an assembly of the plurality of first outer tabs 321 stacked in the third direction. The neighboring first outer tabs 321 may come into contact with each other and may also be spaced apart from each other by a thickness of the separator 230.

The battery 2 may further include a second tab member 302. The second tab member 302 may be connected to the second electrode 220 and may protrude outward from the electrode assembly 200. As the second electrode 220 functions as the negative electrode, the second tab member 302 may function as a negative electrode tab of the battery 2. However, the second tab member 302 may function as the positive electrode tab of the battery 2 when the second electrode 220 is the positive electrode.

The second tab member 302 may extend from the electrode assembly 200 in the first direction. That is, the second tab member 302 may extend toward the opening 160 from the inside of the case 100.

The second tab member 302 may include one or a plurality of tab members. For example, the second tab member 302 may include a second inner tab member 330 and a second outer tab member 340. However, the second tab member 302 may include one tab member or three or more tab members.

The second inner tab member 330 and the second outer tab member 340 may be spaced apart from each other in the second direction. For example, the second inner tab member 330 and the second outer tab member 340 may be sequentially disposed in the second direction. That is, the second outer tab member 340 may be disposed at a position spaced a predetermined distance apart from the second inner tab member 330 in the second direction. The second outer tab member 340 may be disposed at a position relatively closer to the second side surface portion 150 than the second inner tab member 330.

The second inner tab member 330 may include a second inner tab 331. The second inner tab 331 may have the shape of a foil extending from the second uncoated portion 222 of the second electrode 220 in the first direction. The second inner tab 331 may have a substantially rectangular shape. However, the shape of the second inner tab 331 may be designed to have various shapes.

The second inner tab 331 may be formed integrally with the second electrode 220. For example, the second inner tab 331 may be the remaining region of the second uncoated portion 222 which remains after a partial region of the second uncoated portion 222 is cut or removed by notching processing or the like. In one or more other embodiments, the second inner tab 331 may be manufactured separately from the second electrode 220 and then connected to the second uncoated portion 222 by welding or the like. A material of the second inner tab 331 may be the same as a material of the second electrode 220.

A plurality of second inner tabs 331 may be provided. The number of second inner tabs 331 may be the same as the number of second electrodes 220. Each of the second inner tabs 331 may individually extend from the second uncoated portion 222 of a different second electrode 220. Neighboring second inner tabs 331 may be disposed to face each other in the third direction. The neighboring second inner tabs 331 may be disposed parallel to each other. The second inner tab member 330 may be an assembly of the plurality of second inner tabs 331 stacked in the third direction. The neighboring second inner tabs 331 may come into contact with each other and may also be spaced apart from each other by a thickness of the separator 230.

The second outer tab member 340 may include a second outer tab 341. The second outer tab 341 may have the shape of a foil extending from the second uncoated portion 222 of the second electrode 220 in the first direction. The second outer tab 341 may be disposed at a position spaced a predetermined distance apart from the second inner tab 331 in the second direction. The second outer tab 341 may have a substantially rectangular shape. However, the shape of the second outer tab 341 may be designed to have various shapes.

The second outer tab 341 may be formed integrally with the second electrode 220. For example, the second outer tab 341 may be a region excluding the second inner tab 331 among the remaining region of the second uncoated portion 222 which remains after the partial region of the second uncoated portion 222 is cut or removed by notching processing or the like. Alternatively, the second outer tab 341 may be manufactured separately from the second electrode 220 and then connected to the second uncoated portion 222 by welding or the like. A material of the second outer tab 341 may be the same as a material of the second electrode 220.

A plurality of second outer tabs 341 may be provided. The number of second outer tabs 341 may be the same as the number of second electrodes 220. Each of the second outer tabs 341 may individually extend from the second uncoated portion 222 of a different second electrode 220. Neighboring second outer tabs 341 may be disposed to face each other in the third direction. The neighboring second outer tabs 341 may be disposed parallel to each other. The second outer tab member 340 may be an assembly of the plurality of second outer tabs 341 stacked in the third direction. The neighboring second outer tabs 341 may come into contact with each other and may also be spaced apart from each other by a thickness of the separator 230.

Referring further to FIGS. 2 to 5, the cap assembly 400 may be coupled to the case 100 and seal the case 100. The cap assembly 400 may be disposed to face the electrode assembly 200 in the first direction. The cap assembly 400 may include a cap plate 410, a first terminal 420, and a second terminal 430.

The cap plate 410 may form an approximate exterior of the cap assembly 400 and may entirely support the first terminal 420 and the second terminal 430. The cap plate 410 may be formed to have a flat plate shape. The cap plate 410 may be disposed in the opening 160 of the case 100. The cap plate 410 may be disposed to face the electrode assembly 200 in the first direction. That is, the cap plate 410 may be disposed at a position spaced a predetermined distance apart from the electrode assembly 200 in the first direction. The cap plate 410 may be disposed parallel to the bottom portion 110 of the case 100.

The cap plate 410 may be seated on an upper end portion of the case 100, more specifically, on the upper end portions of the front surface portion 120, the rear surface portion 130, the first side surface portion 140, and the second side surface portion 150. The cap plate 410 may be coupled to the case 100 by various types of coupling methods such as welding, bolting, fitting, and the like.

The first terminal 420 may be inserted into the inside of the cap plate 410. The first terminal 420 may be electrically connected to the first electrode 210. As the first electrode 210 functions as the positive electrode, the first terminal 420 may function as a positive electrode terminal of the battery 2. In addition, an upper end portion of the first terminal 420 may protrude outward from the cap plate 410 in the first direction.

FIG. 3 illustrates an example in which the first terminal 420 has a rectangular planar shape, but the shape of the first terminal 420 may be designed to have various shapes such as a circular shape, an oval shape, a polygonal shape, and the like. The first terminal 420 may be formed of an electrically conductive material such as aluminum, nickel, copper, or the like.

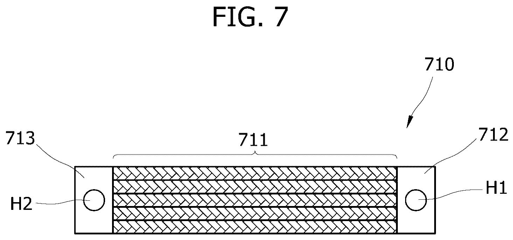

According to one aspect of the present embodiment, a coupling protrusion (second coupling protrusion, not shown) protruding inward from the cap plate 410 in the first direction may be provided at a lower end portion of the first terminal 420. The size or shape of the second coupling protrusion may vary, as long as the second coupling protrusion can be inserted into and coupled to a second coupling hole H2 provided in a second coupling portion 713 of a flexible current collector 710 described below with reference to FIG. 7. For example, the second coupling protrusion may have a cylindrical shape whose diameter is slightly smaller than or substantially the same as that of the second coupling hole H2.

A first gasket 421 may be installed between the cap plate 410 and the first terminal 420. The first gasket 421 may electrically insulate the cap plate 410 and the first terminal 420 and prevent moisture or foreign substances from entering between the cap plate 410 and the first terminal 420.

The first gasket 421 may be formed of an insulating material such as polyethylene (PE), polypropylene (PP), polyethylene terephthalate (PET) rubber, or the like. The first gasket 421 may be fixed between the cap plate 410 and the first terminal 420 by pressing, injection, adhesion, or the like.

The second terminal 430 may be inserted into the inside of the cap plate 410. The second terminal 430 may be electrically connected to the second electrode 220. As the second electrode 220 functions as the negative electrode, the second terminal 430 may function as a negative electrode terminal of the battery 2. In addition, an upper end portion of the second terminal 430 may protrude outward from the cap plate 410 in the first direction.

FIG. 3 illustrates an example in which the second terminal 430 has a rectangular planar shape, but the shape of the second terminal 430 may be designed to have various shapes such as a circular shape, an oval shape, a polygonal shape, and the like. The second terminal 430 may be formed of an electrically conductive material such as aluminum, nickel, copper, or the like.

According to one aspect of the present embodiment, a coupling protrusion (second coupling protrusion, not shown) protruding inward from the cap plate 410 in the first direction may be provided at a lower end portion of the second terminal 430. The size or shape of the second coupling protrusion may vary, as long as the second coupling protrusion can be inserted into and coupled to a second coupling hole H2 provided in a second coupling portion 713 of a flexible current collector 710 described below with reference to FIG. 7. For example, the second coupling protrusion may have a cylindrical shape whose diameter is slightly smaller than or substantially the same as that of the second coupling hole H2.

A second gasket 431 may be installed between the cap plate 410 and the second terminal 430. The second gasket 431 may electrically insulate the cap plate 410 and the second terminal 430 and prevent moisture or foreign substances from entering between the cap plate 410 and the second terminal 430.

The second gasket 431 may be formed of an insulating material such as polyethylene (PE), polypropylene (PP), polyethylene terephthalate (PET) rubber, or the like. The second gasket 431 may be fixed between the cap plate 410 and the second terminal 430 by pressing, injection, adhesion, or the like.

The cap assembly 400 may further include a vent hole 440 and a vent 450. The vent hole 440 may be formed to have the shape of a hole which vertically passes through both sides of the cap plate 410 in the first direction. The vent hole 440 may function as a configuration that provides a path for flames, gas, smoke, or the like formed inside the case 100 to be discharged to the outside of the case 100 when thermal runaway of the battery 2 occurs due to overcurrent, or the like. The vent hole 440 may be disposed between the first terminal 420 and the second terminal 430 in the second direction. A cross-sectional shape of the vent hole 440 may be designed to have various shapes such as an oval shape, a circular shape, a polygonal shape, and the like.

The vent 450 is installed in the vent hole 440 and may be opened and closed in response to a change in internal pressure of the case 100. That is, the vent 450 may prevent an electrolyte and the like in the case 100 from leaking out of the case 100 or moisture, foreign substances, and the like from entering the case 100 by closing the vent hole 440 when the battery 2 normally operates. The vent 450 may guide the flames, gas, smoke, or the like formed in the case 100 to be discharged to the outside of the case 100 by opening the vent hole 440 when thermal runaway of the battery 2 occurs.

The vent 450 may be formed to have a substantially plate shape. The vent 450 may be fixed to the cap plate 410 by various types of coupling methods such as welding, bolting, fitting, and the like. The vent 450 may be disposed in the vent hole 440 or disposed to face the vent hole 440 at an upper or lower side of the cap plate 410 in the first direction.

A thickness of the vent 450 parallel to the first direction may be smaller than a thickness of the cap plate 410. Accordingly, the vent 450 may easily rupture or break when the internal pressure of the case 100 increases. The vent 450 may include a notch formed concavely toward the inside of the vent 450 to preferentially break when the internal pressure of the case 100 increases.

The cap assembly 400 may further include an electrolyte inlet 460 formed to pass through the cap plate 410 and in which a sealing stopper may be installed. The electrolyte inlet 460 may be disposed to be spaced apart from the vent hole 440 by a certain interval in the second direction or in the direction opposite to the second direction. The electrolyte inlet 460 may be disposed between the first terminal 420 and the second terminal 430.

The cap assembly 400 may further include an insulating plate 470. The insulating plate 470 may be disposed between the cap plate 410 and the electrode assembly 200. The insulating plate 470 may prevent direct contact between the cap plate 410 and the electrode assembly 200 to insulate the cap plate 410 and the electrode assembly 200. The insulating plate 470 may fix the position of the electrode assembly 200 in the case 100. The insulating plate 470 may prevent the electrode assembly 200 from being damaged when the cap plate 410 is deformed toward the inside of the case 100 due to an external impact or the like.

The insulating plate 470 may be disposed to face the electrode assembly 200 in the case 100 in a direction opposite to the first direction. That is, the electrode assembly 200, the insulating plate 470, and the cap plate 410 may be sequentially disposed in the first direction. The insulating plate 470 may be fixed to an inner side surface of the case 100 by various types of coupling methods such as fitting, welding, bolting, adhesion, and the like. The insulating plate 470 may come into contact with one surface of the electrode assembly 200 from which the first inner tab member 310 and the second inner tab member 330 extend. The insulating plate 470 may be formed of an insulating material such as polyethylene (PE), polypropylene (PP), polyethylene terephthalate (PET) rubber, or the like.

The first current collector assembly 500 may be disposed between the electrode assembly 200 and the cap assembly 400. The first current collector assembly 500 may be connected to the first terminal 420 and the first tab member 301. The first current collector assembly 500 may function as a configuration that electrically connects the first terminal 420 and the first tab member 301. The first current collector assembly 500 may be formed of a material which is electrically conductive. The first current collector assembly 500 may be variously implemented according to the type of battery, the shape or arrangement position of the first tab member 301, the shape or arrangement position of the first terminal 420, and the like.

According to one or more embodiments, as illustrated in FIG. 3, the first current collector assembly 500 may include a first flexible current collector 510 and a first current collecting plate 520. The first flexible current collector 510 and the first current collecting plate 520 may be manufactured as separate members and joined to each other by welding or the like.

The first flexible current collector 510 and the first current collecting plate 520 may be assembled and joined to each other by male-female fitting. In this case, a concave portion or a hole H1 (see FIG. 7) may be formed in one end portion 712 (see FIG. 7) of the first flexible current collector 510 and a protrusion may be formed on the first current collecting plate 520. Conversely, a protrusion may be formed on the one end portion of the first flexible current collector 510 and the concave portion or hole may be formed in the first current collecting plate 520.

In any case, in a state in which the first flexible current collector 510 and the first current collecting plate 520 are assembled and coupled, the first flexible current collector 510 and the first current collecting plate 520 may be joined to each other by butt welding. According to this, as compared to being joined by overlay welding, welding rigidity may be increased. As a result, the bonding strength between the first flexible current collector 510 and the first current collecting plate 520 may be improved.

In the first flexible current collector 510, one end portion may be joined to the first current collecting plate 520 and the other end portion 713 (see FIG. 7) may be joined and connected to the first terminal 420. The first flexible current collector 510 is connected with a flexible conductive material between the one end portion and the other end portion, and thus may have flexible characteristics as a whole. Accordingly, even when the positions of the first current collecting plate 520 and the first terminal 420 are not aligned in the first direction, the first current collecting plate 520 and the first terminal 420 may be electrically connected to each other through the first flexible current collector 510. That is, the degree of design freedom with respect to an arrangement position of each of the first current collecting plate 520 and the first terminal 420 may be improved. The shape of each of the first flexible current collector 510 and the first current collecting plate 520 and a bonding structure thereof will be described in more detail below.

The other end portion of the first flexible current collector 510 may be brought into contact with and joined to the lower surface of the first terminal 420. For example, in a state in which the flat surface of the other end portion of the first flexible current collector 510 and the lower surface of the first terminal 420 overlap, they may be joined to each other by welding. In one or more other embodiments, when the other end portion of the first flexible current collector 510 is formed of a bundle of metal wires, the bundle of metal wires may be joined to the lower surface of the first terminal 420 by welding while in contact with the lower surface of the first terminal 420.

As another example, the first flexible current collector 510 and the first terminal 420 may also be assembled and joined to each other by male-female fitting. In this case, the concave portion or hole H2 may be formed in the other end portion of the first flexible current collector 510 (see FIG. 7) and a protrusion may be formed on the lower surface of the first terminal 420. Conversely, a protrusion may be formed on the other end portion of the first flexible current collector 510 and the concave portion or hole may be formed in the lower surface of the first terminal 420.

In this case, in a state in which the first flexible current collector 510 and the first terminal 420 are assembled and coupled, the first flexible current collector 510 and the first terminal 420 may be joined to each other by butt welding. Accordingly, as compared to being joined by overlay welding, welding rigidity may be increased. As a result, the bonding strength between the first flexible current collector 510 and the first terminal 420 may be improved.

The first current collecting plate 520 may be connected to the first flexible current collector 510 and the first tab member 301. The first current collecting plate 520 may include a first center plate 521 (first sub plate), and a first inner plate 522 (second sub plate) and a first outer plate 523 (second sub plate) extending from the first center plate on both sides. In one or more other embodiments, the first current collecting plate 520 may include only the first sub plate 521 and one second sub plate 522 or 523 extending on one side thereof.

The first center plate 521 may form a central exterior of the first current collecting plate 520 and one end portion of the first flexible current collector 510 may be joined and connected thereto. The first center plate 521 may be disposed between the first flexible current collector 510 and the electrode assembly 200. However, the first center plate 521 does not necessarily have to be disposed directly under the first terminal 420 in the first direction, and may be disposed closer to the first side surface portion 140 in the second direction or may be disposed farther from the first side surface portion 140 in the second firection. As described above, the first center plate 521 may fix the first flexible current collector 510 while an upper surface thereof comes into contact with a lower surface of the one end portion of the first flexible current collector 510 or fix the first flexible current collector 510 in a male-female fitting state.

Both end portions of the first center plate 521 may extend from a surface coupled with the first flexible current collector 510 toward the electrode assembly 200. Both end portions of the first center plate 521 may pass through the insulating plate 470 and may be disposed at the lower side of the insulating plate 470.

The first inner plate 522 may extend from one end portion of the first center plate 521 in the second direction. The first inner plate 522 may be disposed to face the first inner tab member 310 in the first direction. The first inner plate 522 may come into contact with an end surface of the first inner tab member 310. The first inner tab member 310 and the first inner plate 522 may be joined to each other by laser welding.

The first outer plate 523 may extend from the other end portion of the first center plate 521 in the direction opposite to the second direction. The first outer plate 523 may be disposed to face the first outer tab member 320 in a direction opposite to the first direction. The first outer plate 523 may come into contact with an end surface of the first outer tab member 320. The first outer tab member 320 and the first outer plate 523 may be joined to each other by laser welding.

The first inner plate 522 and the first outer plate 523 may not be on the same plane as the first center plate 521 but may form parallel planes at different heights. More specifically, the first inner plate 522 and the first outer plate 523 may be respectively bent at a boundary between each of the first inner plate 522 and the first outer plate 523 and the first center plate 521 so as to be closer to the first tab member 301 than the first center plate 521. As a result, the first inner plate 522 and the first outer plate 523 may protrude toward the electrode assembly 200 more than the first center plate 521.

The battery 2 may further include a second current collector assembly 600. The second current collector assembly 600 may be disposed between the electrode assembly 200 and the cap assembly 400. The second current collector assembly 600 may be connected to the second terminal 430 and the second tab member 302. The second current collector assembly 600 may function as a configuration that electrically connects the second terminal 430 and the second tab member 302. The second current collector assembly 600 may be formed of a material which is electrically conductive. The second current collector assembly 600 may be variously implemented according to the type of battery, the shape or arrangement position of the second tab member 302, the shape or arrangement position of the second terminal 430, and the like.

According to one or more embodiments, as illustrated in FIG. 3, the second current collector assembly 600 may include a second flexible current collector 610 and a second current collecting plate 620. The second flexible current collector 610 and the second current collecting plate 620 may be manufactured as separate members and joined to each other by welding or the like.

The second flexible current collector 610 and the second current collecting plate 620 may be assembled and joined to each other by male-female fitting. In this case, the concave portion or the hole H2 (see FIG. 7) may be formed in one end portion (see '712' of FIG. 7) of the second flexible current collector 610 and a protrusion may be formed on the second current collecting plate 620. Conversely, a protrusion may be formed on one end portion of the second flexible current collector 610 and the concave portion or hole may be formed in the second current collecting plate 620.

In any case, in a state in which the second flexible current collector 610 and the second current collecting plate 620 are assembled and joined, the second flexible current collector 610 and the second current collecting plate 620 may be joined to each other by butt welding. Accordingly, as compared to being joined by overlay welding, welding rigidity may be increased. As a result, the bonding strength between the second flexible current collector 610 and the second current collecting plate 620 may be improved.

In the second flexible current collector 610, one end portion may be coupled to the second current collecting plate 620 and the other end portion (see '713' of FIG. 7) may be joined to and connected to the second terminal 430. The second flexible current collector 610 is connected with a flexible conductive material between the one end portion and the other end portion, and thus may have flexible characteristics as a whole. Accordingly, even when the positions of the second current collecting plate 620 and the second terminal 430 are not aligned in the first direction, the second current collecting plate 620 and the second terminal 430 may be electrically connected to each other through the second flexible current collector 610. That is, the degree of design freedom with respect to an arrangement position of each of the second current collecting plate 620 and the second terminal 430 may be improved. The shape of each of the second flexible current collector 610 and the second current collecting plate 620 and a bonding structure thereof will be described in more detail below.

The other end portion of the second flexible current collector 610 may be brought into contact with and joined to the lower surface of the second terminal 430. For example, in a state in which the flat surface of the other end portion of the second flexible current collector 610 and the lower surface of the second terminal 430 overlap, they may be joined to each other by welding. Alternatively, when the other end portion of the second flexible current collector 610 is formed of a bundle of metal wires, the bundle of metal wires may be joined to the lower surface of the second terminal 430 by welding while in contact with the lower surface of the second terminal 430.

As another example, the second flexible current collector 610 and the second terminal 430 may also be assembled and joined to each other by male-female fitting. In this case, the concave portion or hole H2 may be formed in the other end portion of the second flexible current collector 610 (see FIG. 7) and a protrusion may be formed on the lower surface of the second terminal 430. Conversely, a protrusion may be formed on the other end portion of the second flexible current collector 610 and the concave portion or hole may be formed in the lower surface of the second terminal 430.

In this case, in a state in which the second flexible current collector 610 and the second terminal 430 are assembled and joined, the second flexible current collector 610 and the second terminal 430 may be joined to each other by butt welding. According to this, as compared to being joined by overlay welding, welding rigidity may be increased. As a result, the bonding strength between the second flexible current collector 610 and the second terminal 430 may be improved.

The second current collecting plate 620 may be connected to the second flexible current collector 610 and the second tab member 302. The second current collecting plate 620 may include a second center plate 621 (first sub plate), a second inner plate 622 (second sub plate) and a second outer plate 623 (second sub plate) extending from the second center plate on both sides. In one or more other embodiments, the second current collecting plate 620 may include only the first sub plate 621 and one second sub plate 622 or 623 extending on one side thereof.

The second center plate 621 may form a central exterior of the second current collecting plate 620 and one end portion of the second flexible current collector 610 may be joined and connected to the second center plate 621. The second center plate 621 may be disposed between the second flexible current collector 610 and the electrode assembly 200. However, the second center plate 621 does not necessarily have to be disposed directly under the second terminal 430 in the first direction and may be disposed closer to the second side surface portion 150 in the second direction or may be disposed farther from the second side surface portion 150 in the second direction. As described above, the second center plate 621 may fix the second flexible current collector 610 while an upper surface thereof comes into contact with a lower surface of the one end portion of the second flexible current collector 610 or fix the second flexible current collector 610 in a male-female fitting state.

Both end portions of the second center plate 621 may extend from a surface coupled with the second flexible current collector 610 toward the electrode assembly 200. Both end portions of the second center plate 621 may pass through the insulating plate 470 and may be disposed at the lower side of the insulating plate 470.

The second inner plate 622 may extend from one end portion of the second center plate 621 in a direction opposite to the second direction. The second inner plate 622 may be disposed to face the second inner tab member 330 in a direction opposite to the first direction. The second inner plate 622 may come into contact with an end surface of the second inner tab member 330. The second inner tab member 330 and the second inner plate 622 may be joined to each other by laser welding.

The second outer plate 623 may extend from the other end portion of the second center plate 621 in the second direction. The second outer plate 623 may be disposed to face the second outer tab member 340 in a direction opposite to the first direction. The second outer plate 623 may come into contact with an end surface of the second outer tab member 340. The second outer tab member 340 and the second outer plate 623 may be joined to each other by laser welding.

The second inner plate 622 and the second outer plate 623 may not be on the same plane as the second center plate 621 but may form parallel planes at different heights. More specifically, the second inner plate 622 and the second outer plate 623 may be respectively bent at a boundary between each of the second inner plate 622 and the second outer plate 623 and the second center plate 621 so as to be closer to the second tab member 302 than the second center plate 621. As a result, the second inner plate 622 and the second outer plate 623 may protrude toward the electrode assembly 200 more than the second center plate 621.

FIG. 7 is a plan view schematically illustrating a configuration of a flexible current collector according to one or more embodiments. Referring to FIG. 7, the flexible current collector 710 may include a main body portion 711, a first coupling portion 712, and a second coupling portion 713. The flexible current collector 710 may correspond to the first flexible current collector 510 or the second flexible current collector 610 shown in FIG. 3 or 4.

The main body portion 711 may be formed of a flexible conductive material. The conductive material is not necessarily limited to metals, and may vary, as long as it is a material with excellent electrical conductivity. For example, the main body portion 711 may include a metal wire or a bundle of metal wires. In the former case, the metal wire may be composed of one metal wire having a relatively large diameter or a metal strip having a predetermined width. In the latter case, it may be a collection of multiple metal wires having a relatively small diameter. In one or more other embodiments, the bundles of metal wires may be braided together and the type of braiding may vary.

The length of the main body portion 711 may vary. However, the length of the main body portion 711 should be a length capable of connecting the first current collecting plate 520, more specifically the first center plate 521, and the first terminal 420. In addition, the length of the main body portion 711 should be a length capable of connecting the second current collecting plate 620, more specifically the second center plate 621, and the second terminal 430. According to the present embodiment, since the first or second center plate 521 or 621 and the first or second terminal 420 or 430 may not be aligned in the first direction, the length of the main body portion 711 may be greater than a distance between the first or second center plate 521 or 621 and the first or second terminal 420 or 430 in the first direction.

The first coupling portion 712 is a portion that extends from one end portion of the main body portion 711 and is a portion that is joined to the first or second current collecting plate 520 or 620. The first coupling portion 712 may also be formed of a conductive material and may be formed of the same material as the main body portion 711 or a different material from the main body portion 711. The first coupling portion 712 may have a box shape with one open side so that one end portion of the main body portion 711, for example, one end portion of a bundle of metal wires, may be inserted and fixed.

The first coupling portion 712 may be formed as a flat plate member having a flat upper surface or lower surface for joining with the first or second current collecting plate 520 or 620. In addition, for male-female coupling with the first or second current collecting plate 520 or 620 in the first coupling portion 712, the coupling hole H1 or groove may be formed. Alternatively, as described above, the first coupling portion 712 may have a coupling protrusion formed thereon.

The second coupling portion 713 is a portion extending from the other end portion of the main body portion 711, that is, in a direction opposite to the first coupling portion 712, and is a portion joined to the first or second terminal 420 or 430. The second coupling portion 713 may also be formed of a conductive material and may be formed of the same material as the main body portion 711 or a different material from the main body portion 711. The second coupling portion 713 may have a box shape with one open side so that the other end portion of the main body portion 711, for example, the other end portion of a bundle of metal wires, may be inserted and fixed.

The second coupling portion 713 may be formed as a flat plate member having a flat upper surface or lower surface for joining with the first or second terminal 420 or 430. In addition, for male-female coupling with the first or second terminal 420 or 430 in the second coupling portion 713, the coupling hole H2 or groove may be formed. In one or more other embodiments, as described above, the second coupling portion 713 may have a coupling protrusion formed thereon.

A virtual straight line connecting the first coupling portion 712 and the second coupling portion 713 is not parallel to an extension direction of the tab members 301 and 302.

Continuing with reference to FIG. 1, the battery 2 may include a plurality of batteries. The plurality of batteries 2 may be arranged in two or more rows in at least one of the longitudinal direction (the X-axis direction based on FIG. 1) and the width direction (the Y-axis direction based on FIG. 1) of the housing 10. FIG. 1 illustrates that the plurality of batteries 2 are arranged in one row of six in the longitudinal direction of the housing 10, but the plurality of batteries 2 may be designed to have various arrangements. The plurality of batteries 2 may be disposed in parallel. The number of batteries 2 may be designed in various ways depending on the size, shape, and the like of the housing 10.

The first terminal 420 of one battery 2 among a pair of neighboring batteries 2 and the second terminal 430 of the other of the pair of neighboring batteries 2 may be disposed to face each other in the longitudinal direction of the housing 10. That is, the front surface portion 120 of one of the pair of neighboring batteries 2 may be disposed to face the rear surface portion 130 of the other of the pair of neighboring batteries 2.

The plurality of batteries 2 may be electrically connected by the bus bar 3. The bus bar 3 may be disposed between the cover 12 and the battery 2. A plurality of bus bars 3 may be provided. Each bus bar 3 may connect a pair of neighboring batteries 2 in series or parallel.

For example, both sides of the bus bar 3 may be respectively connected to the first terminal 420 of one battery 2 of the pair of neighboring batteries 2 and the second terminal 430 of the other battery 2. Accordingly, the plurality of batteries 2 may be connected to each other in series by the bus bar 3. However, the bus bar 3 may also be respectively connected to the first terminal 420 of one battery 2 of the pair of neighboring batteries 2 and the first terminal 420 of the other battery 2 or respectively connected to the second terminal 430 of one battery 2 of the pair of neighboring batteries 2 and the second terminal 430 of the other battery 2.

The bus bar 3 may be formed of an electrically conductive material such as copper, aluminum, nickel, or the like. A specific shape of the bus bar 3 may vary from that shown in FIG. 1 and may be designed to have various shapes capable of electrically connecting neighboring batteries 2.

The plurality of bus bars 3 may be supported in the housing 10 by a bus bar holder H. The bus bar holder H may be formed to have a substantially flat plate shape. The bus bar holder H may be disposed between the cover 12 and the battery 2. The bus bar 3 may be fixed to the bus bar holder H by various types of coupling methods such as fitting, bolting, injection joining, and the like. The bus bar holder H may be configured to include an electrically insulating polymer compound material.

A connection assembly including one or more connection members is disposed between the plurality of electrode tabs and the electrode terminal for electrical connection between the plurality of electrode tabs and the electrode terminal. A part of the connection assembly is joined to a plurality of electrode tabs and the other part is joined to the electrode terminal, thereby electrically connecting the plurality of electrode tabs and the electrode terminal. In the connection assembly, a connection member joined to the plurality of electrode tabs and a connection member joined to the electrode terminal may be different parts of a single structure or may be different structures coupled to each other.

The connection assembly may be referred to as a current collector assembly that collects current supplied from the plurality of electrode tabs and transmits the current to the electrode terminal. The shape or configuration of the current collector assembly may be variously implemented according to the type, internal structure, specifications, and the like of the rechargeable battery.

According to the present invention, since an electrode terminal and a current collecting plate are electrically connected by a flexible current collector, positions of the electrode terminal and the current collecting plate are not dependent on each other. Therefore, the degree of freedom in design of a battery including the electrode terminal and the current collecting plate electrically connected by the flexible current collector can be improved.

However, the effects obtained through the present invention are not limited to the above-described effects, and other technical effects that are not mentioned will be clearly understood by those of ordinary skill in the art from the description of the invention described below.

Although the present invention has been described with reference to the embodiments shown in the drawings, these embodiments are merely exemplary, and it should be understood by those of ordinary skill in the art that various modifications and equivalents are possible.

Therefore, the technical protection scope of the present invention should be determined by the patent claims below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A battery (2), comprising:
a case (100);
an electrode assembly (200) inside the case (100), the electrode assembly (200) including an electrode (210, 220);
a tab member (301, 302) connected to the electrode (210, 220), the tab member (301, 302) extending from the electrode assembly (200);
a cap assembly (400) facing the electrode assembly (200), the cap assembly (400) having a terminal (420, 430); and
a current collector assembly (500, 600) between the electrode assembly (200) and the cap assembly (400),
wherein the current collector assembly (500, 600) includes a current collecting plate (520, 620) coupled to the tab member (301, 302) and a flexible current collector (510, 610, 710) electrically connecting the current collecting plate (520, 620) and the terminal (420, 430).

2. The battery (2) according to claim 1, wherein the flexible current collector (710) includes:
a main body portion (711) including a flexible material;
a first coupling portion (712) extending from one end portion of the main body portion (711), the first coupling portion (712) being joined to the current collecting plate (520, 620); and
a second coupling portion (713) extending from another end portion of the main body portion (711), the second coupling portion (713) being joined to the terminal (420, 430).

3. The battery (2) according to claim 2, wherein the main body portion (711) includes a bundle of metal wires.

4. The battery (2) according to claim 3, wherein the bundle of metal wires is braided.

5. The battery (2) according to any of claims 2 to 4, wherein the first coupling portion (712) and the current collecting plate (520, 620) are joined to each other in a male-female coupling manner.

6. The battery (2) according to claim 5, wherein:
the first coupling portion (712) includes a first coupling hole (H1), and
the current collecting plate (520, 620) includes a first coupling protrusion coupled in the first coupling hole (H1).

7. The battery (2) according to any of claims 2 to 6, wherein the second coupling portion (713) and the terminal (420, 430) are joined to each other in a male-female coupling manner.

8. The battery (2) according to claim 7, wherein:
the second coupling portion (713) includes a second coupling hole (H2), and
the terminal (420, 430) includes a second coupling protrusion coupled in the second coupling hole (H2).

9. The battery (2) according to any of claims 2 to 8, wherein a virtual straight line connecting the first coupling portion (712) and the second coupling portion (713) is not parallel to an extension direction of the tab member (301, 302).

10. The battery (2) according to any one of the preceding claims, wherein:
the current collector assembly (500, 600) is disposed between the electrode assembly (200) and the cap assembly (400),
the current collecting plate (520, 620) includes a first sub plate (521, 621) with a
first surface that is not joined to the tab member (301, 302) and a second sub plate (522, 523, 622, 623) extending from the first sub plate (521, 621) on at least one side of the first sub plate (521, 621), the second sub plate (522, 523, 622, 623) having a first surface joined to the tab member (301, 302); and
the flexible current collector (510, 610, 710) is joined to a second surface side of
the first sub plate (521, 621) to electrically connect the current collecting plate (520, 620) to the terminal (420, 430).

11. The battery (2) according to any one of the preceding claims, wherein the flexible current collector (510, 610, 710) includes:
a main body portion (711) including a flexible material;
a first coupling portion (712) extending from one end portion of the main body portion (711), the first coupling portion (712) being joined to the second surface side of the first sub plate (521, 621); and
a second coupling portion (713) extending from another end portion of the main body portion (711), the second coupling portion (713) being joined to the terminal (420, 430).

12. A battery pack (1), comprising:
a housing (10); and
a plurality of batteries (2) inside the housing (10),
wherein each of the plurality of batteries (2) is the battery according to any one of claims 1 to 11.
